(19) Europäisches Patentamt / European Patent Office / Office européen des brevets

(11) **EP 4 257 265 A1**

(12) **DEMANDE DE BREVET EUROPEEN**

(43) Date de publication:
**11.10.2023 Bulletin 2023/41**

(21) Numéro de dépôt: **22166956.7**

(22) Date de dépôt: **06.04.2022**

(51) Classification Internationale des Brevets (IPC):
**B22F 1/0545** (2022.01)   **B22F 1/16** (2022.01)
**A44C 27/00** (2006.01)   **B22F 1/054** (2022.01)

(52) Classification Coopérative des Brevets (CPC):
(C-Sets disponibles)
**B22F 1/0545; B22F 1/054; B22F 1/16;**
B22F 2998/10; B22F 2999/00   (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Patek Philippe SA Genève**
**1204 Genève (CH)**

(72) Inventeurs:
• **PERRET, Julien**
**74350 Andilly (FR)**
• **HENDRICKS, Nicholas**
**8000 Zurich (CH)**
• **FINELLI, Alba**
**1700 Fribourg (CH)**
• **PEJCHAL, Vaclav**
**1110 Morges (CH)**

(74) Mandataire: **Bovard SA Neuchâtel**
**Rue des Noyers 11**
**2000 Neuchâtel (CH)**

(54) **PROCÉDÉ DE FABRICATION D'UN COMPOSANT HORLOGER OU DE BIJOUTERIE ET LEDIT COMPOSANT HORLOGER OU DE BIJOUTERIE**

(57) La présente invention concerne un procédé de fabrication d'un composant horloger ou de bijouterie dans un matériau comprenant au moins 18 carats d'or, comprenant les étapes suivantes :

a) réaliser des nanoparticules Au@oxyde métallique, l'étape a) comprenant au moins les sous-étapes a1) de synthétiser des nanoparticules d'or qui présentent des dimensions et des formes leur conférant un effet plasmonique; a2) mélanger les nanoparticules d'or de l'étape a1) à un surfactant comprenant des groupes fonctionnels de couplage avec l'oxyde métallique, tout en maintenant un effet plasmonique; a3) former la coquille d'oxyde métallique tout en maintenant un effet plasmonique;

b) réaliser un semi-produit dans un matériau comprenant au moins 18 carats d'or à partir des nanoparticules Au@oxyde métallique de l'étape a), tout en maintenant un effet plasmonique, le semi-produit présentant une couleur telle que la différence ΔE dans l'espace colorimétrique CIE Lab entre la couleur du semi-produit obtenu et la couleur des nanoparticules Au@oxyde métallique formées à l'étape a), à l'état sec, est inférieure à 10 ;

c) réaliser le composant horloger ou de bijouterie dans ledit matériau comprenant au moins 18 carats d'or à partir du semi-produit obtenu à l'étape b), tout en maintenant un effet plasmonique.

La présente invention concerne également un composant horloger ou de bijouterie obtenu par le procédé de fabrication tel que défini ci-dessus, ledit composant horloger ou de bijouterie étant obtenu à partir d'un semi-produit qui présente une couleur définie dans l'espace CIE L*a*b par les paramètres -5 <a*< 5, -5 <b*< 5 et L*< 15.

Fig. 1

**(Cont. page suivante)**

EP 4 257 265 A1

(52) Classification Coopérative des Brevets (CPC):
(Cont.)

C-Sets
B22F 2998/10, B22F 9/24, B22F 1/0545,
B22F 1/145, B22F 1/16, C22C 1/05, B22F 3/02,
B22F 3/10;
B22F 2999/00, B22F 3/10, B22F 3/02,
B22F 3/225;
B22F 2999/00, B22F 3/10, B22F 3/23

**Description**

**Domaine technique**

La présente invention concerne un procédé de fabrication d'un composant horloger ou de bijouterie dans un matériau comprenant au moins 18 carats d'or, c'est-à-dire comprenant au moins 75% d'or en poids par rapport au poids total du matériau.

La présente invention concerne également ledit composant horloger ou de bijouterie obtenu par ledit procédé de fabrication.

**Etat de la technique**

Les alliages en or sont couramment utilisés dans la fabrication de composants horlogers ou de bijouterie, sous la forme d'un revêtement déposé ou sous une forme massive. Ces alliages sont traditionnellement de couleur jaune, rouge ou grise. Les alliages d'or colorés pour s'écarter de la couleur originale de l'or peuvent être obtenus par la voie métallurgique traditionnelle, ou en utilisant des nanoparticules d'or revêtues d'au moins une couche d'oxyde métallique, tel que l'oxyde de silicium, de zirconium ou de titane, en se basant sur l'effet plasmonique des nanoparticules d'or. Pour désigner de telles nanoparticules d'or recouvertes d'une coquille ou shell d'oxyde métallique, on utilise la notation Au@oxyde métallique. En effet, les nanoparticules d'or (de taille allant de 2 à 200 nm typiquement) sont dotées d'un effet plasmonique. L'effet plasmonique consiste en une vibration du nuage électronique des nanoparticules lorsqu'elles sont soumises à un champ électromagnétique. Plus spécifiquement, sous l'influence du champ électrique oscillant de la lumière, les électrons libres d'une nanoparticule métallique subissent des oscillations par rapport au réseau métallique. À certaines fréquences, c'est-à-dire à certaines longueurs d'onde, ces oscillations acquièrent une grande amplitude par le phénomène de résonance. On parle de résonance plasmon (simplification de résonance de plasmons de surface localisés, LSPR). L'absorption de la lumière est maximale aux fréquences de résonance. Après absorption, les plasmons de surface perdent leur énergie de manière radiative (diffusion de la lumière),ou de manière non radiative (sous forme de chaleur).

Cet effet plasmonique confère aux nanoparticules d'or des propriétés optiques extrêmement intéressantes. Les LSPR se traduisent par des résonances dans le domaine visible. Il est donc possible de les exciter avec de la lumière visible, et elles interviennent de manière prépondérante dans les propriétés colorimétriques des nanoparticules. Les LSPR dépendent notamment de la taille et de la forme de la nanoparticule. Par exemple, pour des nanosphères, les résonances de l'or sont situées autour de 520 nm en solution aqueuse et varient peu pour des tailles allant de 2 à 50 nm. Ces nanoparticules apparaissent rouge rubis. Mais la position de la bande d'absorption et sa largeur, et donc la couleur, évoluent en fonction de la taille des nanoparticules : lorsque celle-ci augmente, la bande LSPR se déplace vers les grandes longueurs d'onde et s'élargit. La couleur varie non seulement selon la taille des nanoparticules mais aussi selon leur forme qui dépend des conditions d'obtention. Pour les nanoparticules allongées, telles que les nanobâtonnets, la résonance plasmon se décale dans le rouge à mesure que le rapport d'aspect augmente. Les nanoparticules d'or peuvent donc changer de couleur du rouge au violet en fonction de leur taille. D'autres couleurs comme le vert et le bleu peuvent être obtenues en jouant sur le facteur forme, avec des nanoparticules plus ou moins allongées (bâtonnets).

Le brevet EP 1 887 052 décrit une pièce constituée d'une céramique pigmentée, le pigment étant constitué de nanoparticules d'or par exemple, revêtu de silice cristalline. La pièce obtenue est dans la gamme des rouges. La quantité de pigments dans la céramique est inférieure à 5% en poids. Ce document ne décrit donc aucun composant contenant au moins 75% d'or en poids.

Le brevet EP 2 369 022 décrit un procédé de fabrication d'un matériau massif comprenant au moins 12 carats voir 18 carats d'or, formé de nanoparticules d'or recouvertes de silice. La couleur des nanoparticules d'or utilisées est ajustée selon la taille, la géométrie (sphérique, cylindrique et pyramidale), la composition et l'environnement chimique des nanoparticules. Le matériau massif est obtenu par frittage par chauffage associé à une irradiation par micro-onde permettant de ne pas altérer la coloration spécifique des nanoparticules d'or utilisées. Toutefois, il est décrit la préparation d'une solution de nanoparticules d'or de couleur rouge vif, la solution de nanoparticules d'or recouvertes de silice étant de couleur violette, et la pastille obtenue après chauffage et irradiation par micro-onde étant de couleur noire. Le procédé décrit ne permet donc pas de garantir une préservation de la couleur des nanoparticules, et n'est donc pas suffisamment robuste.

La demande EP 3 482 851 décrit un procédé de fabrication d'un matériau comprenant au moins 18 carats d'or, formé d'un assemblage de nanoparticules d'or dans une matrice de dioxyde de titane. Toutefois, ce procédé est complexe car il nécessite l'utilisation de solvants et le chauffage du mélange formé dans le réacteur. De plus, en raison de l'absorption significative ou des propriétés optiques non-idéales pour la transmission de la lumière du dioxyde de titane, la profondeur de pénétration de la lumière à travers le matériau n'est pas suffisante pour obtenir l'effet plasmonique maximal des nanoparticules d'or, de sorte que la couleur du matériau obtenu n'est pas un noir profond. En outre, il est indiqué que la poudre obtenue est de couleur noire avant les étapes de compactage et de frittage, tandis qu'après ces deux étapes, le matériau est de couleur anthracite. La couleur initiale des nanoparticules est donc altérée. Par ailleurs, les propriétés mécaniques du dioxyde de titane, telles que la dureté, ne sont pas toujours suffisantes pour répondre au cahier des charges imposé selon les composants.

La présente invention vise à remédier à ces inconvénients en proposant un procédé de fabrication d'un composant horloger ou de bijouterie dans un matériau comprenant au moins 18 carats d'or permettant de garantir une préservation et une stabilité de la couleur des nanoparticules utilisées.

Un autre but de la présente invention est de proposer un procédé de fabrication d'un composant horloger ou de bijouterie permettant d'obtenir un composant composite comprenant au moins 18 carats d'or et présentant de très bonnes propriétés mécaniques.

Un autre but de la présente invention est de proposer un procédé de fabrication d'un composant horloger ou de bijouterie dans un matériau comprenant au moins 18 carats d'or permettant d'obtenir de manière simple un composant de couleur foncée, grise ou noire, et notamment noir profond.

Divulgation de l'invention

A cet effet, l'invention concerne un procédé de fabrication d'un composant horloger ou de bijouterie dans un matériau comprenant au moins 18 carats d'or, ledit procédé comprenant les étapes suivantes :

a) réaliser une solution de nanoparticules Au@oxyde métallique comprenant un cœur d'or recouvert d'une coquille d'oxyde métallique, l'étape a) comprenant au moins les sous-étapes :

a1) synthétiser des nanoparticules d'or par réaction d'un précurseur d'or avec un agent réducteur, lesdites nanoparticules d'or présentant des dimensions et des formes leur conférant un effet plasmonique au moins dans le domaine du visible;

a2) mélanger les nanoparticules d'or obtenues à l'étape a1) à une solution d'un surfactant comprenant des groupes fonctionnels de couplage avec l'oxyde métallique et maintenir sous agitation le temps suffisant pour que ledit surfactant enrobe les nanoparticules d'or, tout en maintenant un effet plasmonique;

a3) former la coquille d'oxyde métallique par réaction d'un précurseur d'oxyde métallique avec les nanoparticules d'or obtenues à la sous-étape a2), tout en maintenant un effet plasmonique;

b) réaliser un semi-produit dans un matériau comprenant au moins 18 carats d'or à partir de la solution obtenue à l'étape a) en vue de former ledit composant horloger ou de bijouterie, tout en maintenant un effet plasmonique, le semi-produit obtenu présentant une couleur telle que la différence $\Delta E$ dans l'espace colorimétrique CIE Lab entre la couleur du semi-produit obtenu et la couleur des nanoparticules Au@oxyde métallique formées à l'étape a), à l'état sec, est inférieure à 10, de préférence inférieure ou égale à 8;

c) réaliser le composant horloger ou de bijouterie dans ledit matériau comprenant au moins 18 carats d'or à partir du semi-produit obtenu à l'étape b), tout en maintenant un effet plasmonique.

Ainsi, le procédé selon l'invention permet de ne pas altérer et de préserver la couleur des nanoparticules d'or synthétisées, notamment lors de l'obtention du semi-produit, et d'obtenir un composant comprenant au moins 18 carats d'or présentant sensiblement la même couleur que les nanoparticules d'or synthétisées au départ, cette couleur étant avantageusement noire.

La présente invention concerne également un composant horloger ou de bijouterie obtenu par le procédé de fabrication tel que défini ci-dessus, ledit composant horloger ou de bijouterie étant obtenu à partir d'un semi-produit qui présente une couleur définie dans l'espace CIE L*a*b par les paramètres -5 <a*< 5, -5 <b*< 5 et L*< 15.

Brève description des dessins

D'autres caractéristiques et avantages de la présente invention apparaîtront à la lecture de la description détaillée suivante de différents modes de réalisation de l'invention, donnés à titre d'exemples non limitatifs, et faite en référence aux dessins annexés dans lesquels :

- la figure 1 représente schématiquement les étapes d'une première variante du procédé selon l'invention ;

**EP 4 257 265 A1**

- la figure 2 représente schématiquement les étapes d'une deuxième variante du procédé selon l'invention ;

- la figure 3 est une image obtenue par microscopie électronique à transmission (TEM- échelle 20 nm) des nanoparticules Au@oxyde métallique obtenues selon l'étape a) du procédé selon l'invention; et

- la figure 4 représente des courbes de réflectance de nanoparticules Au@SiO$_2$ de couleur noire obtenues selon l'étape a) du procédé de l'invention.

**Modes de réalisation de l'invention**

La présente invention concerne un procédé de fabrication d'un composant horloger ou de bijouterie dans un matériau comprenant au moins 18 carats d'or, c'est-à-dire au moins 75% d'or en poids par rapport au poids total du matériau.

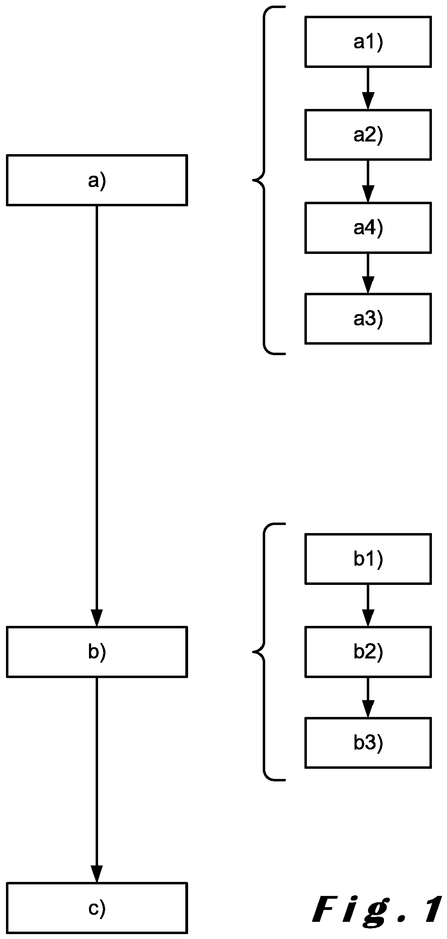

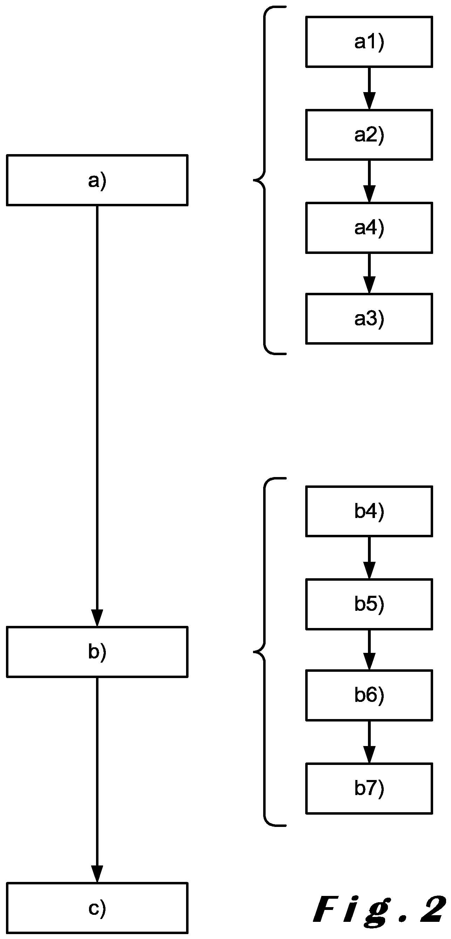

Conformément à l'invention, est en référence aux figures 1 et 2, ledit procédé comprend les étapes suivantes :

a) réaliser une solution de nanoparticules Au@oxyde métallique comprenant un cœur d'or recouvert d'une coquille d'oxyde métallique, l'étape a) comprenant au moins les sous-étapes :

a1) synthétiser des nanoparticules d'or en solution par réaction d'un précurseur d'or avec un agent réducteur, lesdites nanoparticules d'or présentant des dimensions et des formes leur conférant un effet plasmonique au moins dans le domaine du visible correspondant à une couleur X prédéterminée;

a2) mélanger la solution de nanoparticules d'or obtenues à l'étape a1) à une solution d'un surfactant comprenant des groupes fonctionnels de couplage avec l'oxyde métallique et maintenir sous agitation le temps suffisant pour que ledit surfactant enrobe les nanoparticules d'or, tout en maintenant un effet plasmonique, les nanoparticules obtenues présentant une couleur X1;

a3) former la coquille d'oxyde métallique par réaction d'un précurseur d'oxyde métallique avec les nanoparticules d'or obtenues à la sous-étape a2), tout en maintenant un effet plasmonique, les nanoparticules Au@oxyde métallique formées présentant une couleur X2 mesurée à l'état sec, sous forme de poudre, telle que la différence de couleur ΔE dans l'espace colorimétrique CIE Lab entre les couleurs X1 et X2 est de préférence inférieure à 8, de préférence inférieure ou égale à 5, plus préférentiellement inférieure à 3, voire inférieure à 1, la différence de couleur ΔE dans l'espace colorimétrique CIE Lab entre les couleurs X et X2 étant de préférence inférieure à 8, de préférence inférieure à 5, plus préférentiellement inférieure à 3, voire inférieure à 1;

b) réaliser un semi-produit dans un matériau comprenant au moins 18 carats d'or à partir de la solution obtenue à l'étape a) en vue de former ledit composant horloger ou de bijouterie, tout en maintenant un effet plasmonique, le semi-produit obtenu présentant une couleur X3 telle que la différence ΔE dans l'espace colorimétrique CIE Lab entre les couleurs X2 et X3 est inférieure à 10, de préférence inférieure ou égale à 8 et plus préférentiellement inférieure ou égale à 7, la différence ΔE dans l'espace colorimétrique CIE Lab entre les couleurs X et X3 étant de préférence inférieure à 10, plus préférentiellement inférieure ou égale à 8, et plus préférentiellement inférieure ou égale à 7;

c) réaliser le composant horloger ou de bijouterie dans ledit matériau comprenant au moins 18 carats d'or à partir du semi-produit obtenu à l'étape b), tout en maintenant un effet plasmonique, ledit composant horloger ou de bijouterie obtenu présentant une couleur X4 telle que la différence ΔE dans l'espace colorimétrique CIE Lab entre les couleurs X2 et X4 est de préférence inférieure à 10, de préférence inférieure ou égale à 8, et plus préférentiellement inférieure ou égale à 7, et la différence ΔE dans l'espace colorimétrique CIE Lab entre les couleurs X et X4 est de préférence inférieure à 10, plus préférentiellement inférieure ou égale à 8, et plus préférentiellement inférieure ou égale à 7.

La différence de couleur ou l'écart de couleur ΔE dans l'espace colorimétrique CIE Lab est définie comme une mesure de différence entre deux couleurs par l'équation (I):

$$\Delta E^* = \sqrt{(L_2^* - L_1^*)^2 + (a_2^* - a_1^*)^2 + (b_2^* - b_1^*)^2} \qquad (I)$$

$L_1^*$, $a_1^*$, $b_1^*$ sont les coordonnées dans l'espace colorimétrique CIE Lab de la première couleur à comparer et

$L_2^*$, $a_2^*$, $b_2^*$ sont les coordonnées dans l'espace colorimétrique CIE Lab de la seconde couleur à comparer.

Une différence de couleur ΔE entre deux couleurs inférieure à 10, de préférence inférieure ou égale à 8, et plus préférentiellement inférieure ou égale à 7 indique que les deux couleurs sont quasiment identiques, au tout du moins l'une n'est pas altérée par rapport à l'autre.

La synthèse de nanoparticules d'or par réduction d'un précurseur d'or est une synthèse connue de l'homme du métier qui sait choisir les différents paramètres, tels que les concentrations des réactifs, les ratio de concentrations, les solvants, le procédé de synthèse avec chauffage, reflux, etc., pour obtenir des nanoparticules d'or qui présentent des dimensions et des formes identiques ou différentes, choisies pour conférer auxdites nanoparticules d'or un effet plasmonique global au moins dans le domaine du visible correspondant à la couleur X prédéterminée. En effet, la couleur des nanoparticules d'or varie selon la taille et la forme des nanoparticules. Des couleurs du rouge au violet peuvent être obtenues en fonction de la taille, généralement avec des nanoparticules sphériques, tandis que des couleurs comme le vert et le bleu peuvent être obtenues en jouant sur le facteur forme, avec par exemple des nanoparticules plus ou moins allongées, sous forme de bâtonnets. On peut aussi avoir des formes de cubes, d'étoiles, etc. On peut notamment contrôler la taille des particules en jouant sur le ratio or/agent réducteur. Les nanoparticules d'or obtenues à la sous-étape a1) ont de préférence des dimensions inférieures à 200 nm, et de préférence comprises entre 1 nm et 200 nm, et plus préférentiellement entre 20 nm et 200 nm. Il existe de nombreuses publications sur différents procédés de synthèse de nanoparticules d'or permettant de contrôler la taille et la forme desdites nanoparticules d'or pour obtenir la couleur X prédéterminée.

D'une manière avantageuse, à la sous-étape a1), le précurseur d'or est un sel d'or tel que $HAuCl_4$, de préférence en solution aqueuse, dans des concentrations comprises entre 2 g/l et 10 g/l.

D'une manière avantageuse, à la sous-étape a1), l'agent réducteur peut être du $NaBH_4$ ou du citrate de sodium de préférence sous forme de solution aqueuse, dans des concentrations comprises entre 25 g/l et 75 g/l. Le citrate de sodium est préféré. Un tel agent réducteur a l'avantage d'avoir également le rôle de stabilisant permettant de maintenir les nanoparticules d'or en solution.

De préférence, la sous-étape a1) comprend le mélange d'une solution aqueuse du précurseur d'or avec une solution aqueuse d'agent réducteur avec un ratio molaire or/agent réducteur en solution compris entre 1/50 et 1/20, à température ambiante de 25°C.

Lors de la sous-étape a2), le surfactant utilisé, outre ses propriétés de couplage avec l'oxyde métallique, est de préférence un agent stabilisant pour les nanoparticules d'or préparées à la sous-étape a1). Il est avantageusement amphiphile, soluble dans l'eau et dans des solvants organiques. Outre ses groupes fonctionnels de couplage avec l'oxyde métallique, tels que des groupes C=O, il comprend des groupes fonctionnels $CH_2$, apportant l'hydrophobicité et des groupes C-N, par exemple un groupe pyrrolidone, lui conférant son caractère hydrophile.

De préférence, le surfactant est choisi parmi le groupe comprenant la polyvinylpyrrolidone (PVP), des gélatines, des dérivés de silane et des dérivés de silicate.

La couleur X1 des nanoparticules obtenues à l'étape a2) peut être identique ou différente de la couleur X des nanoparticules obtenues à l'étape a1) en fonction de la concentration en surfactant.

De préférence, la solution nanoparticules d'or/surfactant est maintenue sous agitation vigoureuse entre 6 heures et 12 heures, c'est-à-dire le temps nécessaire pour remplacer l'agent réducteur par le surfactant protéger les nanoparticules d'or.

De préférence, le surfactant est la polyvinylpyrrolidone (PVP). D'une manière avantageuse, la PVP utilisée lors de la sous-étape a2) a une masse molaire comprise entre 5000 g/mol et 20 000g/mol et est sous forme d'une solution aqueuse dans des concentrations comprises entre 1 g/l et 10 g/l.

De préférence, le rapport molaire or/PVP en solution est compris entre 1/1 et 3/1.

De préférence, lorsque le surfactant est la PVP, la solution de nanoparticules d'or/PVP est maintenue sous agitation vigoureuse entre 6 heures et 12 heures, c'est-à-dire le temps nécessaire pour remplacer le citrate par la PVP et protéger les nanoparticules d'or. La PVP est un agent surfactant qui empêche l'agglomération et la sédimentation des nanoparticules du fait de ses fonctions alkyles hydrophobes et son groupe pyrrolidone hydrophile. En outre, d'une manière particulièrement avantageuse pour la présente invention, la PVP présente une meilleure affinité avec la silice par exemple sans doute du fait de sa fonction C=O.

Les nanoparticules protégées par le surfactant, et notamment par la PVP, sont ensuite collectées pour la sous-étape a3) ou de préférence pour la sous-étape intermédiaire a4). En effet, d'une manière particulièrement préférée, l'étape a) comprend une sous-étape intermédiaire a4) entre la sous-étape a2) et la sous-étape a3) comprenant l'élimination du surfactant, et notamment de la PVP, en excès. Pour ce faire, les nanoparticules obtenues à la sous-étape a2) sont collectées et concentrées par centrifugation avant d'être mises en œuvre lors de la sous-étape a3). D'une manière particulièrement avantageuse, cette étape de centrifugation permet de laver les nanoparticules avant d'être resuspendues dans l'alcool comme cela sera décrit ci-dessous. Ce lavage permet de contrôler l'épaisseur de la coquille d'oxyde métallique, et plus particulièrement l'épaisseur de la coquille d'oxyde de silice afin d'obtenir des nanoparticules avec des coquilles d'oxyde présentant une épaisseur uniforme.

Selon la sous-étape a3), l'oxyde métallique est de préférence choisi parmi le groupe comprenant l'oxyde de silicium, l'oxyde de zirconium et l'oxyde de titane, de l'oxyde de silicium et l'oxyde de zirconium. L'oxyde de silicium est particulièrement préféré. Sont ainsi synthétisées des nanoparticules comprenant un cœur d'or recouvert d'une coquille d'oxyde de silice, ou d'oxyde de zirconium ou d'oxyde de titane. De préférence, on synthétise des nanoparticules comprenant un cœur d'or avec une coquille d'oxyde de silice ou de zirconium, et plus préférentiellement des nanoparticules comprenant un cœur d'or avec une coquille d'oxyde de silice.

Le précurseur d'oxyde métallique peut être choisi parmi le groupe comprenant le tétraéthoxysilane pour une coquille de silice, le butoxyde de titane pour une coquille de dioxyde de titane et le butoxyde de zirconium pour une coquille de zircone. D'autres précurseurs peuvent être utilisés. Pour obtenir de préférence une coquille de silice, le précurseur d'oxyde de silicium est avantageusement du tétraéthoxysilane (TEOS) en solution alcoolique (par exemple éthanol). La réaction est basée sur la synthèse de Stöber et est catalysée par l'ammoniaque. Les nanoparticules d'or protégées par le surfactant, et notamment par la PVP, récupérées à la sous-étape 2) ou de préférence à la sous-étape a4) sont transférées dans une solution d'alcool et d'ammoniaque, comme décrit ci-dessus. Puis une solution alcoolique de précurseur d'oxyde est immédiatement ajoutée goutte à goutte sous agitation vigoureuse. La réaction est arrêtée de préférence après 3 heures. Les nanoparticules Au@oxyde métallique obtenues sont ensuite collectées pour être maintenues en solution pour être utilisées dans la sous-étape b1) ou séchées sous forme de poudre conformément à la sous-étape b4), comme décrit ci-dessous. Les nanoparticules Au@oxyde métallique obtenues peuvent également être collectées pour être séchées sous forme de poudre, puis être remises en solution pour être utilisées dans la sous-étape b1).

Les paramètres du procédé de la sous-étape a3) sont choisis de manière à former une coquille d'oxyde métallique, et de préférence une coquille d'oxyde de silicium, pour lesquelles un effet plasmonique est maintenu, les nanoparticules Au@oxyde formées présentant une couleur X2, mesurée lorsque les nanoparticules Au@oxyde sont à l'état sec sous forme de poudre. De préférence, notamment la concentration en surfactant est choisie pour que la différence de couleur ΔE dans l'espace colorimétrique CIE Lab entre les couleurs X et X1, X1 et X2, et X et X2 soit de préférence inférieure à 8, de préférence inférieure à 5, de préférence inférieure ou égale à 3, et plus préférentiellement inférieure ou égale à 1, de sorte que la couleur initiale des nanoparticules d'or préparées à la sous-étape a1) soit préservée.

Notamment, l'épaisseur de la coquille peut varier en fonction du ratio précurseur d'oxyde/or ou du temps de réaction. Avantageusement, les surfactants utilisés, et notamment la PVP, en raison de leur affinité avec la silice, permettent d'obtenir une coquille de silice uniforme autour des nanoparticules d'or.

De préférence, l'épaisseur de la coquille est inférieure à 100 nm, et de préférence comprise entre 2 nm et 50 nm, et plus préférentiellement entre 10 nm et 40 nm, l'essentiel étant que la couleur X2 des nanoparticules Au@oxyde obtenues ne soit pas altérée et soit préservée par rapport à la couleur X des nanoparticules d'or préparées initialement.

Selon un mode de réalisation particulièrement préféré, la sous-étape a1) comprend le mélange d'une solution aqueuse du précurseur d'or, de préférence HAuCl$_4$, avec une solution aqueuse de citrate de sodium avec un ratio molaire or/citrate de sodium en solution compris entre 1/50 et 1/20, à température ambiante de 25°C afin de préparer des nanoparticules d'or de couleur X noire définie dans l'espace CIE L*a*b par les paramètres -5 <a*< 5 , -5 <b*< 5 et 0 ≤ L*< 10, de préférence -1 <a*< 1, -3 < b*< 3 et 0≤ L*< 6.

D'une manière particulièrement avantageuse, la réaction est effectuée à température ambiante (25°C) sans aucun apport en énergie. On obtient un colloïde d'or nanostructuré réticulaire formé de cristaux d'or interconnectés pour donner des nanoparticules d'or compactes de différentes tailles entre 40 nm et 200 nm et de formes différentes (nanosphères, cluster, etc...) de couleur X noire définie ci-dessus. La fréquence des photons absorbés par les nanoparticules d'or noir dépend fortement de la forme et de la taille des nanoparticules selon l'effet LSPR. Ainsi, les nanoparticules d'or poly-disperses et multiformes obtenues peuvent absorber la lumière dans un large domaine, ce qui leur confère une couleur noire telle que définie ci-dessus.

Ces nanoparticules d'or noires sont ensuite préparées de préférence avec la PVP selon les sous-étapes a2) et a4). Le rapport molaire or/PVP en solution est compris entre 1/1 et 3/1.

Plus la solution de nanoparticules est diluée dans la PVP, plus la couleur noire des nanoparticules est maintenue. Plus la solution est concentrée en PVP, plus la PVP aura tendance à contrôler la forme et la taille des nanoparticules en cassant la forme réticulaire nanostructurée de l'or, en donnant une couleur tirant sur le rouge.

Les nanoparticules d'or noires préparées de préférence avec la PVP sont ensuite utilisées pour former des nanoparticules Au@oxyde métallique, et de préférence Au@oxyde de silicium Au@oxyde de zirconium selon la sous-étape a3) de couleur X2. La concentration en PVP est choisie de sorte que la couleur X2 est de préférence similaire à la couleur X, de sorte que la couleur X noire des nanoparticules d'or est préservée et n'est pas altérée.

Après la préparation d'une solution de nanoparticules Au@oxyde métallique selon l'étape a), les nanoparticules Au@oxyde métallique peuvent être utilisées sous forme d'une solution ou séchées sous forme de poudre. Pour cela, les nanoparticules Au@oxyde métallique de la solution obtenue à l'étape a) sont lavées plusieurs fois, par exemple avec de l'alcool tel que l'éthanol, puis collectées par centrifugation. Les nanoparticules Au@oxyde métallique, de préférence Au@oxyde de silicium ou Au@oxyde de zirconium, sont ensuite séchées pendant au moins 6 heures, et de préférence au moins 12 heures, par exemple dans un four à 60°C.

On utilise les nanoparticules Au@oxyde métallique sous forme de solution ou de poudre pour obtenir la quantité nécessaire d'or pour réaliser un semi-produit dans un matériau comprenant au moins 18 carats d'or en vue de former ledit composant horloger ou de bijouterie.

Le surfactant, et notamment la PVP, et la coquille adéquate d'oxyde métallique permettent de maintenir un effet plasmonique, le semi-produit obtenu présentant une couleur X3 telle que la différence ΔE dans l'espace colorimétrique CIE Lab entre les couleurs X2 et X3 est inférieure à 10, de préférence inférieure ou égale à 8, plus préférentiellement inférieure ou égale à 7. Lorsque la couleur X2 est similaire à la couleur X1 elle-même similaire à la couleur X, on a donc également une différence ΔE dans l'espace colorimétrique CIE Lab entre les couleurs X et X3 qui est inférieure à 10, plus préférentiellement inférieure ou égale à 8, plus préférentiellement inférieure ou égale à 7.

Selon une première variante du procédé de l'invention, l'étape b) pour réaliser le semi-produit consiste en un procédé choisi parmi le groupe comprenant un procédé d'impression 3D, un procédé par exposition à un rayonnement, par exemple UV ou micro-ondes, et leur combinaison.

Selon une autre variante du procédé de l'invention, l'étape b) pour réaliser le semi-produit comprend les sous-étapes :

b1) mélanger des nanoparticules d'or et d'oxyde métallique, de préférence Au@oxyde de silicium ou Au@oxyde de zirconium, obtenues à l'étape a), lesdites nanoparticules d'or et d'oxyde métallique étant en solution telle qu'obtenue directement à l'étape a), sous forme de poudre si elles ont été séchées dans une étape intermédiaire après l'étape a) ou remises en solution si elles ont été au préalable séchées sous forme de poudre, avec un polymère précéramique fluide, la quantité de nanoparticules Au@oxyde métallique étant choisie de manière à obtenir un fluide composite comprenant au moins 18 carats d'or. Le polymère précéramique fluide est de préférence liquide, avec une viscosité de 10 à 30 cP par exemple. Le mélange peut se faire avec un mélangeur planétaire ou par ultrasons;

b2) mettre en forme le fluide composite obtenu à la sous-étape b1) de manière à former le semi-produit;

b3) effectuer une pyrolyse du fluide composite mis en forme selon la sous-étape b2) pour obtenir le semi-produit de couleur X3. La pyrolyse ou frittage peut s'effectuer à des températures élevées, comprises par exemple entre 1000°C et 1600°C, dans un environnement inerte (argon ou azote) pendant une durée comprise par exemple entre 6 heures et 12 heures, et avec des montées et des descentes en température comprises entre 10°C/h et 25°C/h.

De préférence, le polymère précéramique utilisé lors de la sous-étape b1) est choisi parmi le groupe comprenant les polycarbosiloxanes, les polycarbosilanes, les polysilazanes, les polycarbosilazanes, les polysilanes et les polysilsesquiazanes pour former par pyrolyse des céramiques dérivées de polymères (« Polymer Derived Ceramic » PDC), respectivement oxycarbure de silicium, carbure de silicium, nitrure de silicium, carbonitrure de silicium, oxynitrure de silicium. D'autres polymère précéramiques, notamment comprenant du bore peuvent également être utilisés. Avantageusement, la PDC est choisie pour être plus transparente que l'or après la pyrolyse de sorte que la lumière interagit plus avec l'or qu'avec la PDC pyrolysée. De plus, lorsque la couleur X des nanoparticules d'or est la couleur noire, la PDC est choisie pour être de couleur noire après la pyrolyse lorsqu'elle est utilisée seule, sans nanoparticules Au@oxyde métallique noires.

D'une manière avantageuse, la sous-étape b2) peut être mise en œuvre en utilisant un procédé d'impression 3D.

La sous-étape b2) peut également consister en un procédé choisi parmi le groupe comprenant un procédé par exposition à un rayonnement, tels que UV ou micro-ondes, un procédé par coulage, un procédé par pressage et un procédé de moulage par injection précédé de préférence d'un broyage à billes, en utilisant pour ce faire un moule approprié au composant à fabriquer, par exemple un moule en PTFE, pour obtenir à la fin de la sous-étape b2) un semi-produit compact cru appelé traditionnellement « corps vert » near-net-shape, c'est-à-dire très proche de la forme finale du composant à fabriquer. La mise en forme du fluide selon la sous-étape b2) peut notamment se faire par coulage à froid, par pressage par injection ou par extrusion à froid. La mise en forme du fluide selon la sous-étape b2) peut également se faire par pressage ou compression isostatique à chaud en chauffant le produit dans son moule à 300°C sous 60 MPa pendant 30 min. Le produit est retiré du moule puis éventuellement à nouveau chauffé à 400°C sous 60 MPa pendant 6 heures.

Selon une autre variante du procédé de l'invention, l'étape b) pour réaliser le semi-produit comprend les sous-étapes :

b4) préparer une poudre à partir d'une solution de nanoparticules d'or et d'oxyde métallique, de préférence Au@oxyde de silicium ou Au@oxyde de zirconium, obtenues à l'étape a). Pour cela les nanoparticules Au@oxyde métallique, de préférence Au@oxyde de silicium ou Au@oxyde de zirconium, de la solution obtenue à l'étape a) sont lavées plusieurs fois, par exemple avec de l'alcool tel que l'éthanol, puis collectées par centrifugation. Les nanoparticules Au@oxyde métallique, de préférence Au@oxyde de silicium ou Au@oxyde de zirconium, sont ensuite séchées pendant au moins 6 heures, et de préférence au moins 12 heures, par exemple dans un four à 60°C ;

b5) mélanger ladite poudre obtenue selon la sous-étape b4) avec une céramique de manière à obtenir une poudre composite comprenant au moins 18 carats d'or, la quantité de nanoparticules Au@oxyde métallique étant choisie de manière à obtenir une poudre composite comprenant au moins 18 carats d'or;

b6) mettre en forme la poudre composite obtenu à la sous-étape b5) de manière à former le semi-produit ;

b7) effectuer une pyrolyse de la poudre composite mise en forme selon la sous-étape b6) pour obtenir le semi-produit de couleur X3. La pyrolyse peut s'effectuer comme décrit ci-dessus pour la sous-étape b3).

De préférence, la céramique utilisée à la sous-étape b5) est choisie parmi le groupe comprenant une zircone, une alumine, l'oxycarbure de silicium, le carbure de silicium, le nitrure de silicium, le carbonitrure de silicium, l'oxynitrure de silicium, le carbure de titane, le nitrure de titane, le diborure de titane, le carbure de bore. Avantageusement, la céramique est choisie pour être plus transparente que l'or après la pyrolyse de sorte que la lumière interagit plus avec l'or qu'avec la céramique pyrolysée. De plus, lorsque la couleur X des nanoparticules d'or est la couleur noire, la céramique est choisie pour être de couleur noire après la pyrolyse lorsqu'elle est utilisée seule, sans nanoparticules Au@oxyde métallique noires. La céramique permet d'obtenir un matériau composite comprenant au moins 18 carats d'or présentant des très bonnes propriétés mécaniques, la ductibilité, la dureté et la ténacité étant améliorées par rapport à un or pur.

D'une manière avantageuse, la sous-étape b6) est mise en œuvre par un procédé traditionnel de mise en œuvre des céramiques. La sous-étape b6) peut consister par exemple en un procédé choisi parmi le groupe comprenant un procédé par coulage, un procédé par pressage et un procédé par moulage par injection, via la formation d'un corps vert par exemple, comme décrit ci-dessus pour la sous-étape b2).

Enfin, l'étape c) de réalisation du composant horloger ou de bijouterie comprend par exemple un traitement mécanique d'usinage et/ou de finition pour obtenir ledit composant horloger ou de bijouterie de couleur X4 telle que la différence ΔE dans l'espace colorimétrique CIE Lab entre les couleurs X3 et X4 est de préférence inférieure à 10, de préférence inférieure ou égale à 8, et plus préférentiellement inférieure ou égale à 7, et telle que la différence ΔE dans l'espace colorimétrique CIE Lab entre les couleurs X2 et X4 est de préférence inférieure à 10, de préférence inférieure ou égale à 8, et plus préférentiellement inférieure ou égale à 7. Le traitement mécanique d'usinage est par exemple un fraisage, ou tout autre procédé approprié Le traitement mécanique de finition est par exemple un polissage ou tout autre procédé approprié. Lorsque la couleur X2 est similaire à la couleur X1, elle-même similaire à la couleur X, on a donc également une différence ΔE dans l'espace colorimétrique CIE Lab entre les couleurs X et X4 qui est inférieure à 10, plus préférentiellement inférieure ou égale à 8, et plus préférentiellement inférieure ou égale à 7.

On obtient ainsi un composant horloger ou de bijouterie dans un matériau comprenant au moins 18 carats d'or, et notamment un matériau composite du type Cermet combinant céramique et métal, et présentant toutes les propriétés mécaniques intéressantes des céramiques, notamment la ductibilité, la dureté et la ténacité.

De préférence, on utilise des nanoparticules comprenant un cœur d'or avec une coquille d'oxyde de silice ou de zirconium, et plus préférentiellement des nanoparticules comprenant un cœur d'or avec une coquille d'oxyde de silice.

Une coquille d'oxyde de silice ou de zirconium autour du cœur en or présente plusieurs avantages:

- dans le cas de nanoparticules d'or noir, les alliages atteindront une couleur plus foncée en raison de la profondeur de pénétration plus efficace de la lumière due à une meilleure association des indices de réfraction entre la coquille d'oxyde métallique et le cœur en or. L'interaction de la lumière à l'interface de la coquille d'oxyde métallique et du cœur en or va augmenter dans le matériau massif en raison de l'indice de réfraction plus faible du dioxyde de silicium ou du dioxyde de zirconium par rapport à l'indice de réfraction du dioxyde de titane ;

- l'indice de réfraction inférieur du dioxyde de silicium ou du dioxyde de zirconium est également un avantage pour obtenir des alliages d'or 18k de différentes couleurs, par exemple rouge, bleu, violet et vert ;

- les propriétés mécaniques seront améliorées en utilisant une coquille de dioxyde de silicium ou de dioxyde de zirconium plutôt que de dioxyde de titane en raison d'une augmentation de la dureté Vickers. La résistance mécanique globale du composant final obtenu sera ainsi améliorée et la résistance à la rayure augmentée ;

- la densité plus faible du dioxyde de silicium par rapport à celle du dioxyde de titane permettra d'obtenir un alliage d'or avec une finesse d'or plus élevée que celle obtenue avec une coquille en dioxyde de titane.

Par ailleurs, le surfactant, et notamment la PVP, du fait de son affinité avec l'oxyde métallique, et notamment avec la silice ou le zirconium, permet d'obtenir une coquille de silice ou de zircone uniforme autour des nanoparticules d'or. Cette coquille uniforme permet avantageusement d'empêcher la fusion des nanoparticules d'or durant les traitements thermiques ultérieurs, tels que la pyrolyse, de sorte que l'effet plasmonique des nanoparticules d'or est préservé et qu'au moins la couleur X2 des nanoparticules Au@oxyde métallique préparées n'est pas altérée par les différents traitements thermiques nécessaires à l'obtention du semi-produit de couleur X3, la différence $\Delta E$ dans l'espace colorimétrique CIE Lab entre les couleurs X3 et X2 étant inférieure à 10, de préférence inférieure ou égale à 8, et plus préférentiellement inférieure ou égale à 7. De plus, d'une manière avantageuse, la couleur X2 des nanoparticules Au@oxyde métallique préparées n'est pas altérée par les différents traitements thermiques nécessaires à l'obtention du composant horloger ou de bijouterie de couleur X4, la différence $\Delta E$ dans l'espace colorimétrique CIE Lab entre les couleurs X2 et X4 étant de préférence inférieure à 10, de préférence inférieure ou égale à 8, et plus préférentiellement inférieure ou égale à 7. Lorsque la couleur X2 est similaire à la couleur X1, elle-même similaire à la couleur X, c'est l'effet plasmonique initial et la couleur initiale X des nanoparticles d'or qui sont préservés, la différence $\Delta E$ dans l'espace colorimétrique CIE Lab entre les couleurs X et X3 étant inférieure à 10, plus préférentiellement inférieure ou égale à 8, et plus préférentiellement inférieure ou égale à 7, et la différence $\Delta E$ dans l'espace colorimétrique CIE Lab entre les couleurs X et X4 étant de préférence inférieure à 10, plus préférentiellement inférieure ou égale à 8, et plus préférentiellement inférieure ou égale à 7.

Dans un procédé particulièrement préféré de l'invention, la sous-étape a1) comprend le mélange d'une solution aqueuse du précurseur d'or ($HAuCl_4$) avec une solution aqueuse de citrate de sodium avec un ratio molaire or/citrate de sodium en solution compris entre 1/50 et 1/20 à température ambiante de 25°C, le surfactant utilisé à la sous-étape a2) est la polyvinylpyrrolidone (PVP) en solution aqueuse, le rapport molaire or/PVP en solution étant compris entre 1/1 et 3/1, et le précurseur de l'oxyde métallique utilisé à la sous-étape a3) est le tétraéthoxysilane en solution alcoolique. On obtient à l'étape a) des nanoparticules Au@$SiO_2$ présentant, à l'état sec sous forme de poudre, une couleur noire X2 définie dans l'espace CIE L*a*b par les paramètres $-5 <a^*< 5$, $-5 < b^*< 5$ et $0 \leq L^*< 10$, de préférence $-1 <a^*< 1$, $-3 <b^*< 3$ et $0 \leq L^*< 6$, le semi-produit obtenu à l'étape b) étant de couleur X3 définie dans l'espace CIE L*a*b par les paramètres $-5 <a^*< 5$, $-5 <b^*< 5$ et $0\leq L^*< 15$, de préférence $-1 <a^*< 1$, $-1 <b^*< 1$ et $0 \leq L^*< 13$, et le composant horloger ou de bijouterie obtenu à l'étape c) étant de préférence de couleur X4 définie dans l'espace CIE L*a*b par les paramètres $-5 <a^*< 5$, $-5 <b^*< 5$ et $0\leq L^*< 15$, de préférence $-1 <a^*< 1$, $-1 <b^*< 1$ et $0 \leq L^*< 13$.

La présente invention concerne également un composant horloger ou de bijouterie obtenu par le procédé de fabrication tel que décrit ci-dessus, et obtenu à partir d'un semi-produit qui présente une couleur définie dans l'espace CIE L*a*b par les paramètres $-5 <a^*< 5$, $-5 <b^*< 5$ et $0 \leq L^*< 15$, de préférence $-1 <a^*< 1$, $-1 <b^*< 1$ et $0 \leq L^*< 13$, ledit composant horloger ou de bijouterie présentant de préférence une couleur définie dans l'espace CIE L*a*b par les paramètres $-5 <a^*< 5$, $-5 <b^*< 5$ et $0 \leq L^*< 15$, de préférence $-1 <a^*< 1$, $-1 <b^*< 1$ et $0 \leq L^*< 13$.

Un tel composant horloger ou de bijouterie est par exemple une masse oscillante, un élément d'habillage d'une montre, un bijou.

L'exemple suivant illustre la présente invention sans toutefois en limiter la portée.

Exemple

On prépare une solution de citrate (A) comprenant 54.4ml d'eau Milli-Q et 2,72 g de citrate de sodium. On prépare une solution d'or (B) comprenant 28ml d'eau Milli-Q et 136mg $HAuCl_4$ $3H_2O$. On prépare une solution de PVP (C) comprenant 630ml d'eau Milli-Q et 1.55g de PVP (10K).

La solution A est versée dans la solution B et la réaction est maintenue sous agitation pendant 10 minutes. Le colloïde d'or noir synthétisé est ensuite versé dans la solution C et on maintient une agitation vigoureuse pendant une nuit. Les nanoparticules d'or noires sont collectées par centrifugation et sont transférées dans une solution d'EtOH et d'ammoniaque (6ml EtOH + 0,375ml d'ammoniaque). Une solution de TEOS dans de l'EtOH (4ml EtOH + 0,27ml TEOS) est immédiatement ajoutée goutte à goutte sous agitation vigoureuse. La réaction est arrêtée après 3 heures. Les nanoparticules Au@oxyde de silicium (Au@$SiO_2$) sont ensuite lavées 3 fois avec de l'EtOH et collectées par centrifugation pour être finalement séchées au four à 60°C pendant une nuit.

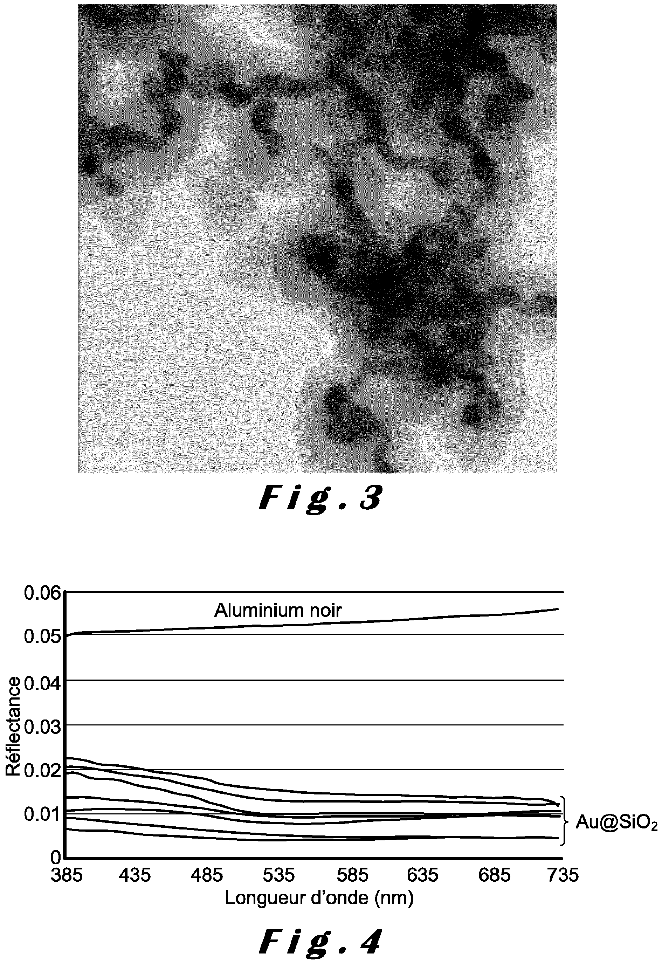

Les nanoparticules Au@oxyde de silicium obtenues sont caractérisées par microscopie électronique à transmission (TEM). La figure 3 montre que les nanoparticules Au@oxyde de silicium obtenues sont sous forme d'or réticulaire multiformes, compacts, enrobés d'une coquille de silice. Les dimensions des nanoparticules sont comprises entre 3 et 100 nm, avec une coquille de silice de 12 nm d'épaisseur environ.

Les nanoparticules Au@$SiO_2$ en solution obtenues à l'étape a) sont séchées sous forme de poudre, par plusieurs lavages à l'éthanol, centrifugation puis séchées pendant 12 heures dans un four à 60°C.

Les nanoparticules Au@oxyde de silicium sous forme de poudre sèche présentent une couleur X2 définie dans l'espace CIE L*a*b par les paramètres a*=0.4, b* = -2.8, L* = 5.5, les mesures étant réalisées avec un appareil i1Pro3 de X-Rite. La réflectance des nanoparticules Au@SiO₂ est mesurée par l'appareil i1Pro3 de X-Rite pour sept échantillons. A titre comparatif, on mesure la réflectance d'une feuille d'aluminium noir. On obtient les courbes représentées sur la figure 4 qui correspondent bien à des nanoparticules Au@SiO₂ de couleur noire.

Les nanoparticules Au@SiO₂ sont ensuite compactées par pressage isostatique à chaud (HIP) à 300°C, 667 bar pendant 1 heure. Les nanoparticules Au@SiO₂ présentent une couleur X' intermédiaire définie dans l'espace CIE L*a*b par les paramètres a* =0.6, b* = -0.5, L* = 13.6. Le ΔE dans l'espace colorimétrique CIE Lab entre X2 et X' est de 8.4.

Puis, on effectue la pyrolyse pour obtenir un semi-produit contenant 18 carats d'or de couleur X3 définie dans l'espace CIE L*a*b par les paramètres a* =0.2, b* = -0.9, L* = 12.7. Le ΔE dans l'espace colorimétrique CIE Lab entre X3 et X2 est de 7.4. Le ΔE par rapport à l'état compacté après HIP, entre X3 et X', est de 1 environ.

Cela montre que la pyrolyse des nanoparticules Au@SiO₂ n'altère pas la couleur des nanoparticules Au@SiO₂ obtenue lors des étapes de fabrication précédentes. Notamment la couleur des nanoparticules Au@SiO₂ synthétisées est préservée et n'est pas altérée.

De plus, on obtient des nanoparticules d'or et des nanoparticules Au@SiO₂ très noires, et donc un composant dans un matériau composite comprenant 18 carats d'or et une céramique pour lequel la couleur initiale noire des nanoparticules d'or a été préservée et n'est pas altérée.

## Revendications

1. Procédé de fabrication d'un composant horloger ou de bijouterie dans un matériau comprenant au moins 18 carats d'or, ledit procédé comprenant les étapes suivantes :

   a) réaliser une solution de nanoparticules Au@oxyde métallique comprenant un cœur d'or recouvert d'une coquille d'oxyde métallique, l'étape a) comprenant au moins les sous-étapes :

   a1) synthétiser des nanoparticules d'or par réaction d'un précurseur d'or avec un agent réducteur, lesdites nanoparticules d'or présentant des dimensions et des formes leur conférant un effet plasmonique au moins dans le domaine du visible;
   a2) mélanger les nanoparticules d'or obtenues à l'étape a1) à une solution d'un surfactant comprenant des groupes fonctionnels de couplage avec l'oxyde métallique, et maintenir sous agitation le temps suffisant pour que ledit surfactant enrobe les nanoparticules d'or, tout en maintenant un effet plasmonique;
   a3) former la coquille d'oxyde métallique par réaction d'un précurseur d'oxyde métallique avec les nanoparticules d'or obtenues à la sous-étape a2), tout en maintenant un effet plasmonique;

   b) réaliser un semi-produit dans un matériau comprenant au moins 18 carats d'or à partir de la solution obtenue à l'étape a) en vue de former ledit composant horloger ou de bijouterie, tout en maintenant un effet plasmonique, le semi-produit obtenu présentant une couleur telle que la différence ΔE dans l'espace colorimétrique CIE Lab entre la couleur du semi-produit obtenu et la couleur des nanoparticules Au@oxyde métallique formées à l'étape a), à l'état sec, est inférieure à 10, de préférence inférieure ou égale à 8;
   c) réaliser le composant horloger ou de bijouterie dans ledit matériau comprenant au moins 18 carats d'or à partir du semi-produit obtenu à l'étape b), tout en maintenant un effet plasmonique.

2. Procédé de fabrication selon la revendication 1, **caractérisé en ce que** l'étape a) comprend une sous-étape intermédiaire a4) entre la sous-étape a2) et la sous-étape a3) comprenant l'élimination du surfactant en excès.

3. Procédé de fabrication selon l'une des revendications précédentes, **caractérisé en ce que** le surfactant est choisi parmi le groupe comprenant la polyvinylpyrrolidone (PVP), des gélatines, des dérivés de silane et des dérivés de silicate, de préférence la polyvinylpyrrolidone (PVP).

4. Procédé de fabrication selon l'une des revendications précédentes, **caractérisé en ce que** l'étape b) consiste en un procédé choisi parmi le groupe comprenant un procédé d'impression 3D, un procédé par exposition à un rayonnement, et leur combinaison.

5. Procédé de fabrication selon l'une des revendications 1 à 3, **caractérisé en ce que** l'étape b) comprend les sous-étapes :

b1) mélanger des nanoparticules d'or et d'oxyde métallique obtenues à l'étape a) avec un polymère précéramique fluide de manière à obtenir un fluide composite comprenant au moins 18 carats d'or ;

b2) mettre en forme le fluide composite obtenu à la sous-étape b1) de manière à former le semi-produit ;

b3) effectuer une pyrolyse du fluide composite mis en forme selon la sous-étape b2) pour obtenir le semi-produit.

6. Procédé de fabrication selon la revendication 5, **caractérisé en ce que** le polymère précéramique est choisi parmi le groupe comprenant les polycarbosiloxanes, les polycarbosilanes, les polysilazanes, les polycarbosilazanes, les polysilanes et les polysilsesquiazanes pour former des céramiques dérivées de polymères respectivement oxycarbure de silicium, carbure de silicium, nitrure de silicium, carbonitrure de silicium, oxynitrure de silicium.

7. Procédé de fabrication selon l'une des revendications 5 et 6, **caractérisé en ce que** la sous-étape b2) consiste en un procédé choisi parmi le groupe comprenant un procédé d'impression 3D, un procédé par exposition à un rayonnement, un procédé par coulage, un procédé par pressage et un procédé de moulage par injection.

8. Procédé de fabrication selon l'une des revendications 1 à 3, **caractérisé en ce que** l'étape b) comprend les sous-étapes :

b4) préparer une poudre à partir d'une solution de nanoparticules d'or et d'oxyde métallique obtenues à l'étape a) ;

b5) mélanger ladite poudre obtenue selon la sous-étape b4) avec une céramique de manière à obtenir une poudre composite comprenant au moins 18 carats d'or;

b6) mettre en forme la poudre composite obtenu à la sous-étape b5) de manière à former le semi-produit;

b7) effectuer une pyrolyse de la poudre composite mise en forme selon la sous-étape b6) pour obtenir le semi-produit.

9. Procédé de fabrication selon la revendication 8, **caractérisé en ce que** la céramique est choisie parmi le groupe comprenant une zircone, une alumine, l'oxycarbure de silicium, le carbure de silicium, le nitrure de silicium, le carbonitrure de silicium, l'oxynitrure de silicium, le carbure de titane, le nitrure de titane, le diborure de titane, le carbure de bore.

10. Procédé de fabrication selon l'une des revendications 8 et 9, **caractérisé en ce que** la sous-étape b6) consiste en un procédé choisi parmi le groupe comprenant un procédé par coulage, un procédé par pressage et un procédé de moulage par injection.

11. Procédé de fabrication selon l'une des revendications précédentes, **caractérisé en ce que** l'étape c) comprend un traitement mécanique d'usinage et/ou de finition pour obtenir ledit composant horloger ou de bijouterie.

12. Procédé de fabrication selon l'une des revendications précédentes, **caractérisé en ce que** les nanoparticules d'or obtenues à la sous-étape a1) présentent des dimensions inférieures à 200 nm.

13. Procédé de fabrication selon l'une des revendications précédentes, **caractérisé en ce que** l'agent réducteur est $NaBH_4$ ou du citrate de sodium, de préférence du citrate de sodium.

14. Procédé de fabrication selon l'une des revendications précédentes, **caractérisé en ce que** la sous-étape a1) comprend le mélange d'une solution aqueuse du précurseur d'or avec une solution aqueuse d'agent réducteur avec un ratio molaire or/agent réducteur en solution compris entre 1/50 et 1/20 à température ambiante de 25°C.

15. Procédé de fabrication selon l'une des revendications précédentes, **caractérisé en ce que** la coquille d'oxyde métallique présente une épaisseur inférieure à 100 nm.

16. Procédé de fabrication selon l'une des revendications précédentes, **caractérisé en ce que** le précurseur d'or est un sel d'or, de préférence l'acide tétrachloraurique.

17. Procédé de fabrication selon l'une des revendications précédentes, **caractérisé en ce que** le précurseur d'oxyde métallique est choisi parmi le groupe comprenant le tétraéthoxysilane pour une coquille de silice, le butoxyde de titane pour une coquille de dioxyde de titane et le butoxyde de zirconium pour une coquille de zircone.

18. Procédé de fabrication selon l'une des revendications précédentes, **caractérisé en ce que** la sous-étape a1) comprend le mélange d'une solution aqueuse du précurseur d'or avec une solution aqueuse de citrate de sodium avec un ratio molaire or/citrate de sodium en solution compris entre 1/50 et 1/20 à température ambiante de 25°C, les nanoparticules d'or obtenues à la sous-étape a1) présentant une couleur noire définie dans l'espace CIE L*a*b par les paramètres -5 <a*< 5, -5 <b*< 5 et L*< 10, de préférence -1 <a*< 1, -3 <b*< 3 et L*< 6.

19. Procédé de fabrication selon l'une des revendications précédentes, **caractérisé en ce que** la sous-étape a1) comprend le mélange d'une solution aqueuse du précurseur d'or avec une solution aqueuse de citrate de sodium avec un ratio molaire or/citrate de sodium en solution compris entre 1/50 et 1/20 à température ambiante de 25°C, **en ce que** le surfactant utilisé à la sous-étape a2) est la polyvinylpyrrolidone (PVP) en solution aqueuse, le rapport molaire or/PVP en solution étant compris entre 1/1 et 3/1, et **en ce que** le précurseur de l'oxyde métallique utilisé à la sous-étape a3) est le tétraéthoxysilane en solution alcoolique, pour obtenir des nanoparticules Au@SiO$_2$ présentant, à l'état sec, une couleur définie dans l'espace CIE L*a*b par les paramètres -5 <a*< 5, -5 <b*< 5 et L*< 10, de préférence -1 <a*< 1, -3 <b*< 3 et L*< 6, la couleur du semi-produit obtenu à l'étape b) étant définie dans l'espace CIE L*a*b par les paramètres -5 <a*< 5, -5 <b*< 5 et L*< 15, de préférence -1 <a*< 1, -1 <b*< 1 et L*< 13.

20. Composant horloger ou de bijouterie obtenu par le procédé de fabrication selon l'une des revendications précédentes, **caractérisé en ce qu'**il est obtenu à partir d'un semi-produit qui présente une couleur définie dans l'espace CIE L*a*b par les paramètres -5 <a*< 5, -5< b*< 5 et L*< 15, de préférence -1 <a*< 1, -1 <b*< 1 et L*< 13.

21. Composant horloger ou de bijouterie selon la revendication 20, **caractérisé en ce qu'**il consiste en une masse oscillante, un élément d'habillage d'une montre, un bijou.

a1)

↓

a2)

↓

a4)

↓

a3)

a)

↓

b)

b1)

↓

b2)

↓

b3)

↓

c)

*Fig. 1*

*F i g . 2*

***Fig.3***

***Fig.4***

Europäisches
Patentamt

European
Patent Office

Office européen
des brevets

# RAPPORT DE RECHERCHE EUROPEENNE

Numéro de la demande

**EP 22 16 6956**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | EP 3 482 851 A1 (CARTIER INT AG [CH]) 15 mai 2019 (2019-05-15) | 20,21 | INV. B22F1/0545 |
| A | * alinéa [0012] * <br> * alinéa [0023] * <br> * alinéa [0035] * <br> * alinéa [0057] * <br> ----- | 1-19 | B22F1/16 A44C27/00 B22F1/054 |
| A,D | EP 2 369 022 A1 (NEOLLIA SAS [FR]) 28 septembre 2011 (2011-09-28) * le document en entier * ----- | 1-21 | |
| A | CH 711 352 B1 (CARTIER INT AG [CH]) 30 septembre 2019 (2019-09-30) * le document en entier * ----- | 1-21 | |
| A | EP 2 480 611 B1 (ROLEX SA [CH]) 21 août 2019 (2019-08-21) * le document en entier * ----- | 1-21 | |
| A | CN 1 605 645 A (ROLEX SA [CH]) 13 avril 2005 (2005-04-13) * le document en entier * ----- | 1-21 | **DOMAINES TECHNIQUES RECHERCHES (IPC)** B22F A44C C22C |

Le présent rapport a été établi pour toutes les revendications

| Lieu de la recherche | Date d'achèvement de la recherche | Examinateur |
|---|---|---|
| La Haye | 21 septembre 2022 | Helgadóttir, Inga |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 16 6956

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-09-2022

| Document brevet cité au rapport de recherche | | Date de publication | Membre(s) de la famille de brevet(s) | | Date de publication |
|---|---|---|---|---|---|
| EP 3482851 | A1 | 15-05-2019 | CH | 714326 A1 | 15-05-2019 |
| | | | EP | 3482851 A1 | 15-05-2019 |
| EP 2369022 | A1 | 28-09-2011 | CH | 702835 A2 | 15-09-2011 |
| | | | EP | 2369022 A1 | 28-09-2011 |
| CH 711352 | B1 | 30-09-2019 | AUCUN | | |
| EP 2480611 | B1 | 21-08-2019 | EP | 2305756 A1 | 06-04-2011 |
| | | | EP | 2480611 A1 | 01-08-2012 |
| | | | WO | 2011035446 A1 | 31-03-2011 |
| CN 1605645 | A | 13-04-2005 | CN | 1605645 A | 13-04-2005 |
| | | | DE | 03405645 T1 | 01-09-2005 |
| | | | DE | 60310555 T2 | 27-12-2007 |
| | | | EP | 1512765 A1 | 09-03-2005 |
| | | | JP | 4813028 B2 | 09-11-2011 |
| | | | JP | 2005120465 A | 12-05-2005 |
| | | | US | 2005053514 A1 | 10-03-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1887052 A
- EP 2369022 A
- EP 3482851 A